Europäisches Patentamt

European Patent Office

Office européen des brevets

(19)

(11) Veröffentlichungsnummer: **0 131 246**
**B1**

(12) **EUROPÄISCHE PATENTSCHRIFT**

(45) Veröffentlichungstag der Patentschrift: **07.11.90**

(51) Int. Cl.⁵: **B 60 C 11/12**

(21) Anmeldenummer: **84107734.0**

(22) Anmeldetag: **04.07.84**

(54) **Fahrzeugluftreifen.**

(30) Priorität: **08.07.83 DE 3324649**

(43) Veröffentlichungstag der Anmeldung:
**16.01.85 Patentblatt 85/03**

(45) Bekanntmachung des Hinweises auf die
Patenterteilung:
**07.11.90 Patentblatt 90/45**

(84) Benannte Vertragsstaaten:
**AT BE CH DE FR GB IT LI LU NL SE**

(56) Entgegenhaltungen:
**FR-A- 791 250**
**LU-A- 58 967**
**US-A-2 538 491**

(73) Patentinhaber: **Continental Aktiengesellschaft**
**Königsworther Platz 1**
**D-3000 Hannover 1 (DE)**

(72) Erfinder: **Mauk, Gerhard, Dipl.-Ing.**
**Bleichenstrasse 49 A II**
**D-3050 Wunstorf 2 (DE)**
Erfinder: **Huinink, Heinrich, Dipl.-Ing.**
**Elbinger Strasse 2A**
**D-3008 Garbsen 1 (DE)**

Courier Press, Leamington Spa, England.

## Beschreibung

Die Erfindung betrifft einen Fahrzeugluftreifen mit im Laufstreifen angeordneten Feineinschnitten, die zur Reifenumfangsrichtung geneigt sind.

Diese Feineinschnitte dienen der Erhöhung der Griffigkeit des Reifens, zugleich können sie dazu beitragen, kompakte Blöcke im Laufstreifenbereich weicher und nachgiebiger zu gestalten. Im übrigen werden unter Feineinschnitten solche Profilvertiefungen verstanden, die von praktisch parallelen Flächen an gegenüberliegenden Stellen Gebrauch machen, die ihrerseits einen Abstand von etwa 0,4 bis 1,2 mm haben. Diese Feineinschnitte werden im Regelfall in der Vulkanisierform durch dort fest verankerte Stahlbleche abgeformt.

Es ist bekannt, in Reifenumfangsrichtung aufeinanderfolgende Feineinschnitte anzuordnen, die von ebenen Blechen abgeformt sind, jedoch unterschiedlich zur Reifenumfangsrichtung, also einmal in die Umfangsrichtung und zum anderen gegen die Umfangsrichtung anstehen.

Durch einen solchen Anstieg können besondere Wirkungen beim Bremsen und Beschleunigen erreicht werden; die Lamellenkanten, also die die Feineinschnitte begrenzenden Wandungen können sich aufrichten und den Schluß zum Boden erhöhen. Diese Ausführungen haben jedoch den Nachteil, daß ein ungleichmäßiger Abrieb im Laufstreifenbereich eintritt. Es können Sägezahnbildungen entstehen.

In der LU-A-58967 wird ein Fahrzeugluftreifen mit einem Laufstreifen beschrieben, der ebenfalls Feineinschnitte aufweist. Dabei sind zwei übereinanderliegende Abschnitte der Feineinschnitte vorgesehen, die unter einem Winkel zueinander stehen, z. B. durch eine gabelförmige Ausbildung. Durch eine solche Gestaltung soll die Aufgabe gelöst werden, nachteilige Folgen eingeschlossener Fremdkörper auszuschließen. Es kommt also darauf an, zur Vermeidung des weiteren Eindringens von Fremdkörpern eine Stufung zwischen dem radial äußeren Teil und dem radial inneren Teil eines Feineinschnitts zu erzeugen.

Der Erfindung liegt im wesentlichen die Aufgabe zugrunde, unter Beibehaltung eines guten Kraftschlusses des Reifens zum Untergrund und eines gleichmäßigen Abriebbildes und Abriebes die für die Lebensdauer der Vulkanisierform wichtigen Bleche zur Abformung der Feineinschnitte bezüglich ihrer Lebensdauer zu verbessern.

Zur Lösung dieser Aufgabe sind die Merkmale des Anspruchs 1 vorgesehen.

Die derartige Feineinschnitte abformenden Bleche der Vulkanisierform müssen dementsprechend verwunden bzw. geformt sein; aus diesen Gründen haben sie im Vergleich zu ebenen, schräg anstehenden Blechen eine größere Festigkeit, die sich insbesondere in einer vergleichsweise großen Standfestigkeit ausdrücken muß, wenn der Kautschuk bei der Reifenherstellung in die Vertiefungen der Vulkanisierform hineingepreßt wird. Zudem ergibt sich infolge der Winkelstellungen der Feineinschnitte eine verbesserte Bodenhaftung, ohne jedoch hierbei infolge der Ungleichförmigkeit des Winkelanstiegs (im Vergleich zu ebenen, schräg anstehenden Feineinschnitten) eine Sägezahnbildung im Laufstreifen in Kauf nehmen zu müssen.

Weitere Einzelheiten der Erfindung werden anhand der Zeichnung erläutert, in der Ausführungsbeispiele der Erfindung dargestellt sind. Es zeigen:

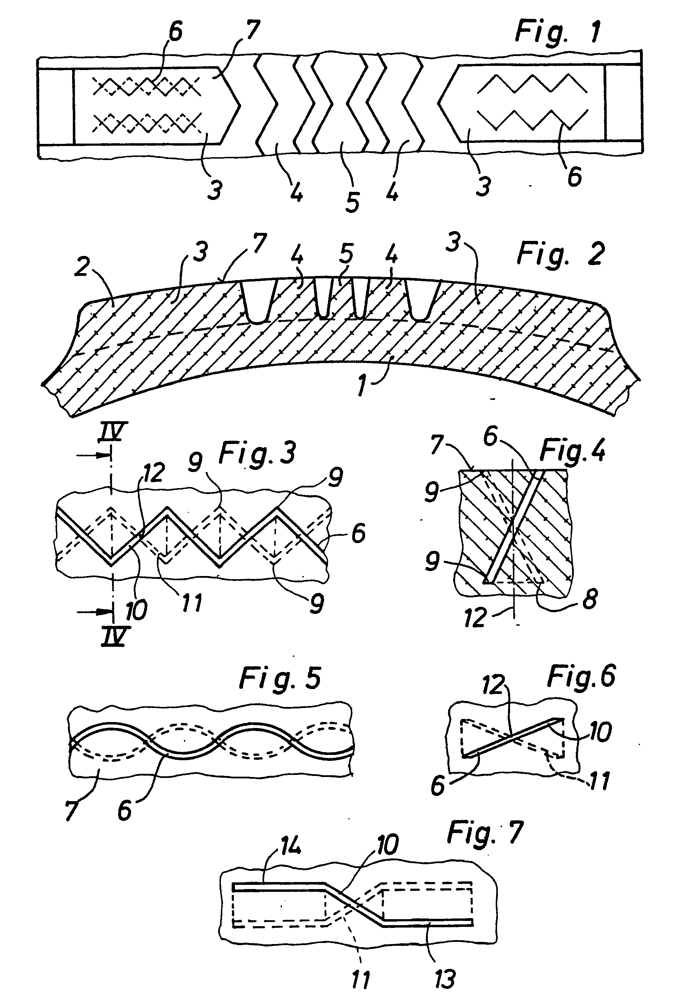

Fig. 1 eine Teildraufsicht auf den Laufstreifen eines Fahrzeugluftreifens für Straßenfahrzeuge,

Fig. 2 einen radialen Schnitt durch den Reifenabschnitt gemäß Fig. 1,

Fig. 3 einen Ausschnitt aus dem Reifen gemäß Fig. 1.

## Patentansprüche

1. Fahrzeugluftreifen mit im Laufstreifen (2) angeordneten Feineinschnitten (6), die zur Reifenumfangsrichtung geneigt sind, dadurch gekennzeichnet, daß der Abschnitt (10; Fig. 6 bzw. 7) bzw. die Abschnitte (10; Fig. 3 bis 5) der Feineinschnitte (6) um eine zumindest etwa radial verlaufende Verwindungsachse (12) stufenlos in sich verwunden ist bzw. sind.

2. Reifen nach Anspruch 1, dadurch gekennzeichnet, daß die mit der Reifenumfangsrichtung eingeschlossenen Winkel zumindest etwa gleich groß sind.

3. Reifen nach den Ansprüchen 1 oder 2, dadurch gekennzeichnet, daß die zickzack- oder wellenförmigen Feineinschnitte (6) im Laufflächenbereich und im Wurzelbereich von Profilelementen (3) bezüglich ihrer Teilung vorzugsweise um eine halbe Teilung des Zickzack bzw. der Wellenform gegeneinander versetzt sind.

4. Reifen nach Anspruch 1, dadurch gekennzeichnet, daß die Feineinschnitte (6) bei einer Draufsicht auf die Reifenlauffläche unter Berücksichtigung des Laufflächenabschnittes (10) und des Wurzelabschnittes (11) ein X beschreiben (Fig. 6).

5. Reifen nach Anspruch 4, dadurch gekennzeichnet, daß die Feineinschnitte (6) gemäß Anspruch 4 entgegengesetzt schräg anstehende, ebene Feineinschnitte miteinander verbinden (Fig. 7).

6. Reifen nach Anspruch 1, dadurch gekennzeichnet, daß sich die Verwindungsachse (12) etwa auf halber Länge der zugehörigen Abschnitte (10, 11) befindet.

7. Reifen nach Anspruch 1, dadurch gekennzeichnet, daß die Verwindung etwa 30 bis 100° beträgt (Winkel der Abschnitte 10, 11 zueinander gemäß Fig. 3).

## Revendications

1. Pneumatique pour véhicules comprenant de fines incisions (6) ménagées dans la bande de roulement (2) qui sont inclinées par rapport à la direction circonférentielle du pneumatique, caractérisé en ce que le segment (10; figure 6 ou 7) ou les segments (10; figures 3 à 5) des fines incisions (6) est ou sont torsadé(s) progressivement par torsion autour d'au moins un axe de torsion (12) qui s'étend au moins à peu près radialement.

2. Pneumatique selon la revendication 1, caractérisé en ce que les angles formés avec la direction circonférentielle du pneumatique sont au moins approximativement égaux.

3. Pneumatique selon la revendication 1 ou 2, caractérisé en ce que les fines incisions (6) en zig-zag ou ondulées contenues dans la région de la surface de roulement et dans la région profonde des éléments (3) de la sculpture sont décalées les unes par rapport aux autres, de préférence d'un demi-pas du zig-zag ou de l'ondulation.

4. Pneumatique selon la revendication 1, caractérisé en ce que, dans une vue de dessus de la bande de roulement du pneumatique, les fines incisions (6) forment un X si l'on considère le segment (10) situé au niveau de la surface de roulement et le segment (11) situé au niveau de la région profonde (figure 6).

5. Pneumatique selon la revendication 4, caractérisé en ce que les fines incisions (6) selon la revendication 4 relient entre elles des fines incisions planes qui sont inclinées dans des sens opposés (figure 7).

6. Pneumatique selon la revendication 1, caractérisé en ce que l'axe de torsion (12) se trouve à peu près au milieu de la longueur des segments respectifs (10, 11).

7. Pneumatique selon la revendication 1, caractérisé en ce que la torsion est d'environ 30 à 100° (angle que les segments 10, 11 forment entre eux selon la figure 3).

**Claims**

1. Pneumatic vehicle tyre having fine incisions (6), which are disposed in the tread strip (2) and are inclined relative to the circumferential direction of the tyre, characterised in that the portion (10; Fig. 6 or 7 respectively) or the portions (10; Figs. 3 to 5) of the fine incisions (6) is or are twisted continuously about a twist axis (12), which extends at least substantially radially.

2. Tyre according to claim 1, characterised in that the angles subtended with the circumferential direction are at least substantially identical in size.

3. Tyre according to claims 1 or 2, characterised in that the zig-zag-shaped or undulatory fine incisions (6) in the tread surface region and in the root region of profile elements (3) are offset from one another in respect of their spacing from one another, preferably by an amount corresponding to half the zig-zag or undulatory form.

4. Tyre according to claim 1, characterised in that the fine incisions (6) describe an "X" (Fig. 6), when the tread surface of the tyre is viewed from above, with regard to the tread surface portion (10) and the root portion (11).

5. Tyre according to claim 4, characterised in that the fine incisions (6) according to claim 4 join together flat fine incisions which extend inclinedly in opposite directions (Fig. 7).

6. Tyre according to claim 1, characterised in that the twist axis (12) is situated substantially halfway along the length of the associated portions (10, 11).

7. Tyre according to claim 1, characterised in that the twist amounts to substantially 30° to 100° (angle between the portions 10 and 11, as shown in Fig. 3).

Fig. 1

Fig. 2

Fig. 3

Fig. 4

Fig. 5

Fig. 6

Fig. 7